# EUROPEAN PATENT SPECIFICATION

(11) **EP 3 979 033 B1**
(45) Date of publication and mention of the grant of the patent: **12.02.2025**
(21) Application number: 19938363.9
(22) Date of filing: 22.11.2019
(51) Int. Cl.: B64G 1/28, B64G 1/24, G01C 19/06, G01C 19/16

(54) **LOW-DISTURBANCE DUAL-GIMBAL FLYWHEEL BASED ON SPATIAL PARALLEL MECHANISM**
STÖRUNGSARMES DUAL-GIMBAL-SCHWUNGRAD AUF BASIS VON RÄUMLICHEM PARALLELMECHANISMUS
VOLANT À DOUBLE CARDAN À FAIBLE PERTURBATION BASÉ SUR UN MÉCANISME PARALLÈLE SPATIAL

(30) Priority: 23.07.2019 CN 201910667368
(43) Date of publication of application: 06.04.2022
(73) Proprietor: Beijing Institute of Control Engineering, Beijing 100094 (CN)
(72) Inventor: LUO, Ruizhi, Beijing 100094 (CN); ZHANG, Jiyang, Beijing 100094 (CN); ZHANG, Qiang, Beijing 100094 (CN); QIN, Tao, Beijing 100094 (CN); WU, Jintao, Beijing 100094 (CN); FAN, Yahong, Beijing 100094 (CN); ZHAI, Baichen, Beijing 100094 (CN); WANG, Xiaowei, Beijing 100094 (CN); WANG, Shuyan, Beijing 100094 (CN); ZHAO, Lei, Beijing 100094 (CN)
(74) Representative: Potter Clarkson
(86) International application number: PCT/CN2019/120202
(87) International publication number: WO 2021/012539

(56) References cited:
- WO-A2-00/12269
- CN-A- 103 587 724
- CN-A- 103 587 724
- CN-A- 106 742 056
- CN-A- 107 963 187
- CN-A- 107 963 187
- CN-A- 109 597 438
- CN-A- 109 597 438
- CN-A- 109 987 254
- CN-A- 109 987 254
- CN-U- 204 557 222
- US-A1- 2005 242 241
- US-A1- 2017 121 037

## Description

The present application claims the priority to Chinese Patent Application No. 201910667368.6, titled "LOW-DISTURBANCE DUAL-GIMBAL QUASI-UNIVERSAL ATTITUDE ACTUATOR BASED ON SPATIAL PARALLEL MECHANISM", filed with the China National Intellectual Property Administration on July 23, 2019.

### FIELD

The present application relates to the technical field of space inertial attitude actuators, and in particular to a low-disturbance dual-gimbal flywheel having a spatial parallel mechanism.

### BACKGROUND

A flywheel and a control moment gyroscope have been widely used in a spacecraft such as a remote sensing satellite, a communication satellite and a space telescope. They are the key inertial attitude actuators for a long-life spacecraft to achieve attitude maneuver and stability. With the development of aerospace science and technology, users have put forward higher requirements for an ultra-quiet and ultra-agile satellite platform; with the rapid development of a small and medium-sized satellite, the weight control for the product on the satellite has become more and more stringent. Therefore, an ultra-light, ultra-quiet, and ultra-agile satellite platform is required, and, the attitude actuator on the satellite platform is required to have the property of light weight, small vibration, and large output moment.

The flywheel can only output a moment in a single direction, and the amplitude of the moment is small; although the existing gimbal flywheel has a certain yaw ability on the angular momentum vector in a radial direction, the yaw range is generally relatively small; while a single gimbal control moment gyroscope can output a large moment in 360°, and it has a large moment magnification and a high efficiency; a double gimbal control moment gyroscope can output a large moment in a whole space, and the moment magnification thereof is limited by the locking moment of a motor, the structure is relatively complicated, and the reliability is low, so it is rarely used in orbit. It can be seen that in order to achieve a three-axis attitude control for the spacecraft, at least three flywheel products or four single gimbal control moment gyroscope products or one double gimbal control moment gyroscope product is required; in order to achieve the zero-momentum three-axis attitude control for the spacecraft, more flywheels and control moment gyroscopes are required, making it difficult to reduce the weight of the attitude control actuator system. In addition, the gyroscopic moment generated by the coupling of the speed of the spacecraft during rapid maneuver and the angular momentum of the rotor may act on the frame motor, in this situation, the frame motor needs to be locked, but limited locking moment limits the maneuvering speed of the spacecraft such as a satellite.

The flywheel and the rotor in the control moment gyroscope may produce broadband micro-vibration during high-speed rotation, and the systemic and effective vibration control is not performed on the product. If they are directly mounted on the spacecraft, the broadband micro-vibration generated by the flywheel or the control moment gyroscope may become one of the main vibration sources of the spacecraft, which may affect the attitude stability and ultra-quietness of the spacecraft platform, and to a certain extent, affect the realization of the performance index of the load, and even the attitude stability of the satellite platform.

In view of the small output moment of the flywheel, it is impossible to achieve the rapid attitude maneuvering of the spacecraft such as a satellite. The flywheel and the single gimbal control moment gyroscope require multiple products to work together to achieve the three-axis attitude control for the spacecraft; while the output moment of the double gimbal control moment gyroscope is limited by the locking moment of the frame motor, which causes the moment amplification effect to be not fully exerted. In addition, the gyroscopic moment generated by the coupling of the maneuvering speed of the spacecraft and the angular momentum of the rotor may act on the frame along the gimbal axis of the control moment gyroscope, which needs to rely on the frame motor to lock. Therefore, the amplitude of the locking moment of the frame motor also limits the maneuvering speed of the spacecraft such as a satellite. On the other hand, the flywheel and the rotor in the control moment gyroscope may produce broadband micro-amplitude vibration during high-speed rotation, which becomes one of the main vibration sources of the spacecraft, thereby affecting the attitude stability and ultra-quietness of the spacecraft platform. In order to keep up with the rapid development of small and medium-sized spacecraft, it is necessary to develop a lighter, quieter, and more agile attitude control platform, and develop an attitude control actuator with better comprehensive performance such as weight, micro-vibration, anti-mechanical performance, attitude control moment and locking ability to match with the attitude control platform.
US2005242241A1 discloses a momentum-control system. The momentum-control system comprises a plurality of momentum actuators and a platform, upon which the plurality of momentum actuators are mounted. The momentum control system further comprises a plurality of active struts mounted on the bottom side of the platform. The active struts are configured to produce a force to steer the plurality of momentum actuators and the platform to produce forces and moments for spacecraft attitude control and disturbance suppression.

### SUMMARY

The technical problem to be solved by the present invention is to overcome the disadvantages of the prior art and a low-disturbance dual-gimbal flywheel is provided according to the appended claims. The spatial parallel mechanism is used for achieving arbitrary continuous angular maneuvering of the rotor angular momentum in a local area, thereby outputting a larger gyroscopic moment in a direction orthogonal to an angular momentum and a frame angular velocity, and a speed change of a rotor can output a small reaction moment in a direction of the angular momentum vector, which may all be used as the attitude control moment for the spacecraft, so as to achieve the omnidirectional attitude control for the spacecraft. The self-locking function of the nut and the lead screw may be used for achieving the locking of the non-maneuvering branch chain, which overcomes the limitation of the frame motor locking moment on the output moment of the double gimbal control moment gyroscope and the maneuvering speed of the spacecraft. A rod on the vibration transmission path may be designed as a spring damper to form a passive vibration isolator, so as to isolate the micro-vibration generated by the rotor assembly. The present invention is beneficial to achieve the functions of an ultra-light, ultra-quiet, ultra-agile, omnidirectional control, etc., and is not be limited by the locking moment.

A low-disturbance dual-gimbal flywheel is defined in claim 1. Embodiments thereof are defined in the dependent claims.

The advantages of the present invention compared with the prior art are as follows.
(1) The spatial parallel mechanism achieves the change of the angular momentum of the rotor in the present application, which is different from the traditional method of relying on the motor to directly drive the angular momentum to change. It also achieves the arbitrary orientation of the angular momentum vector in a locally larger spherical area. Therefore, according to the present application, the spatial parallel mechanism is used for achieving the arbitrary continuous angle maneuvering and arbitrary orientation of the rotor angular momentum in the locally larger spherical area, achieving the function of the dual frame in the double gimbal control moment gyroscope. The structure of the present application is simpler and the weight is lighter.
(2) The self-locking of the nut and the lead screw is used in the present application to achieve the locking of the non-maneuvering branch chains, which overcomes the problem that the output moment in the double gimbal control moment gyroscope is limited by the motor locking moment; and when a spacecraft such as a satellite is maneuvering, the gyroscopic moment generated by the rotor may act on the frame axis, and the frame motor needs to be locked. However, the limited frame motor locking moment of the traditional moment control gyroscope limits the maneuvering speed of the spacecraft, and the load such as moment in the present application is transmitted radially through the nut and the lead screw or self-locking, without motor locking; and the main load such as the moment is transmitted to the housing through the lead screw. Therefore, the product has better mechanical stability and mechanical resistance.
(3) In the present application, the rod on the transmission path of the force and moment load is designed as a spring damper to form a passive vibration isolator, which can isolate the high-frequency micro-vibration generated by the rotor assembly to a certain extent, thereby improving the ultra-quietness performance of the product.
(4) The present application can achieve the ultra-light, ultra-quiet, and ultra-agile attitude control platform, and is especially suitable for a small and medium-sized satellite that is developing rapidly today. If the axis of the frame is mounted in a direction of the yaw axis, the speed change of the rotor can achieve the slow attitude maneuver of the yaw, and the gyroscopic moment can achieve the fast attitude maneuver of the rolling and the pitching.

### BRIEF DESCRIPTION OF THE DRAWINGS

Figure 1 is a schematic view showing the structure of a low-disturbance dual-gimbal flywheel having a spatial parallel mechanism according to the present application; and
Figure 2 is a schematic view showing the structure of a low-disturbance dual-gimbal having a spatial parallel mechanism according to the present application.

### DETAILED DESCRIPTION

The present application will be further described below in conjunction with the drawings.

The high-speed rotation of a rotor produces a certain angular momentum. The speed change of the motor changes the magnitude of the angular momentum; while the rotation of the frame changes the direction of the angular momentum; and changes in the magnitude and direction of the angular momentum may cause the exchange of the angular momentum between an actuator and the spacecraft, which can control the attitude maneuver and stability of the spacecraft. The change of the magnitude of the angular momentum may output a smaller reaction moment, while the change of the direction of the angular momentum may output a larger gyroscopic moment; and they are collectively used as the attitude control moment of the spacecraft such as a satellite. Therefore, a low-disturbance dual-gimbal flywheel having a spatial parallel mechanism is provided according to the present application. The spatial parallel mechanism is mainly used as the frame platform to drag the rotor to change the direction of the angular momentum, thereby outputting a larger gyroscopic moment; and outputting the smaller reaction moment through the speed change of the rotor. They work together to create a three-dimensional attitude control moment space, and one set of this product can output attitude control moment in any direction, thereby achieving three-axis attitude control for the spacecraft.

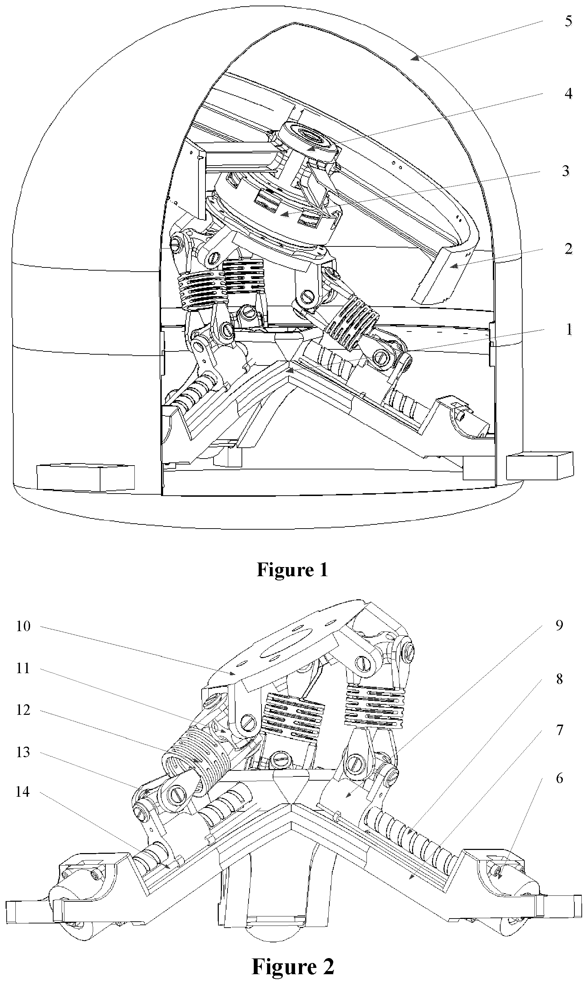

As shown in Figure 1, a low-disturbance dual-gimbal flywheel having a spatial parallel mechanism according to the present application includes a spatial parallel mechanism 1, one wheel body 2, one high-speed motor 3, a bearing 4, and a housing 5; the wheel body 2 is a circular frame structure, and a circle is supported by spokes circularly radiating outward from the circular frame. A certain acute angle is present between the spokes and the circular plane, which improves the mechanical resistance of the wheel body 2 in the axial direction. The bearing 4 is mounted at the center of the wheel body 2, and the rotor of the high-speed motor 3 is mounted on the bearing 4; the bearing 4 and the stator of the high-speed motor 3 are mounted on the movable platform 10 of the spatial parallel mechanism 1 together.

The wheel body 2, the stator and rotor of the high-speed motor 3, and the bearing 4 are coaxial mounted. The spatial parallel mechanism 1, the wheel body 2, the high-speed motor 3 and the bearing 4 form a whole, which is mounted inside the housing 5 through a port of the static base 7 of the spatial parallel mechanism 1; and a lug outside the housing 5 is connectable to the outer spacecraft deck. The housing 5 must enclose the maximum moving range of the rotor, and includes an upper housing and a lower housing, which are connected to each other by screw and sealed by soldering. The housing 5 forms a closed cavity after being pumped by the air extraction nozzle assembly, which provides a clean, airtight, low-pressure working environment for the platform, rotor, motor and other components therein. It not only prevents the rapid volatilization of the lubricating oil, but also prevents the entry of extras, and also reduces the wind resistance of the product during the ground test.

The rotating parts in the wheel body 2, the high-speed motor 3 and the bearing 4 together form the rotor assembly; the wheel body 2 provides a certain moment of inertia; the bearing 4 stably supports the rotor assembly for a long time and provides a rotating pair for the rotor assembly; the high-speed motor 3 drives the rotor assembly to rotate at a high speed, and the speed of the high-speed motor 3 generally ranges from tens of revolutions per minute to tens of thousands of revolutions per minute, which combines with the moment of inertia to generate a certain angular momentum; and the angular momentum of the rotor assembly is changed by the speed change of the high-speed motor 3, so as to output the reaction moment required for the attitude control of the spacecraft.

In this embodiment, the spatial parallel mechanism 1 is a 3-PUU parallel mechanism including three drive branch chains, and the schematic view of the structure is shown in Figure 2, including a low-speed motor 6, a static base 7, a lead screw 8, and a nut 9, a movable platform 10, a first hinge 11, a spring damper 12, a second hinge 13, and a guide rod 14; the movable platform 10 is connected to the spring damper 12 through the first hinge 11, and the spring damper 12 is connected to the nut 9 through the second hinge 13; and the nut 9 is mounted on the lead screw 8, the lead screw 8 is mounted on the leg of the static base 7 through the bearing, the static base 7 includes a platform and three legs, the platform is support by three legs evenly distributed along the circumferential direction at a bottom of the platform; the rotor of the low-speed motor 6 is fixed to the end of the lead screw 8 by a nut, the stator of the low-speed motor 6 is mounted on the end of the leg of the static base 7 by a screw, and the stator and the rotor of the low-speed motor 6 are coaxially mounted; the guide rod 14 is mounted along the leg of the static base 7, the nut 9 is movable along the guide rod 14, and the guide rod 14 is configured to guide the nut. An angle between the lead screw 8 and a plane of an external mounting interface of the housing 5 is an angle **α**, and the angle α is optimized according to kinematics and dynamics characteristics of the low-disturbance dual-gimbal flywheel having the spatial parallel mechanism.

The low-speed motor 6 drives the lead screw 8 to rotate, and the rotational angular velocity of the lead screw is relatively low, generally not exceeding 1 rad/s. The lead screw 8 drives the nut 9 to move back and forth along the lead screw 8; and then, the rotation of the low-speed motor 6 is transmitted to the movement of the relevant branch chain of the movable platform 10 through the second hinge 13, the spring damper 12 and the first hinge 11; finally, the movement of three driving branch chains enables the movable platform 10 to have at least two degrees of freedom of rotation in mutually perpendicular directions of a plane, which can achieve the yaw of arbitrarily continuous angle in a large range of a certain local area. The rotor assembly is mounted on the movable platform 10 of the frame assembly. If the direction of the angular momentum vector of the rotor assembly is not parallel to the direction of the rotation axis, the direction of the angular momentum vector can be changed by the rotation of the movable platform 10, so as to output the gyroscopic moment required for the attitude control of the spacecraft. In this embodiment, the direction of the angular momentum vector is perpendicular to the plane of the movable platform 10, so that the angular momentum vector can be yaw at arbitrarily continuous angle in a certain local larger spherical area to output a large gyroscopic moment, thereby achieving the super agility of the satellite platform. During the rapid maneuver of the spacecraft, the gyroscopic moment generated by the coupling between the maneuvering angular velocity of the spacecraft and the angular momentum vector of the rotor is transmitted to the spacecraft through the lead screw, and through the self-locking formed by the lead screw 8 and the nut 9, no motor locking is needed, and the limitation of the motor locking moment on the maneuvering speed is overcome.

According to the dual-gimbal flywheel of the present application, a displacement of the nut 9 is calculated by measuring a rotation angle of the lead screw 8 in the spatial parallel mechanism 1, or a real-time displacement of the nut 9 is directly measured, a real-time attitude of the movable platform 10 in the spatial parallel mechanism 1 is calculated by using the displacement of each nut 9, and a real-time deflection angular velocity of the movable platform 10 is determined through relative change of the attitude of the movable platform 10. The magnitude and direction of the gyroscopic moment required for attitude control can be obtained by the cross product of the deflection angular momentum vector and the angular velocity vector.

According to the dual-gimbal flywheel of the present application, any continuous yaw of an angular momentum vector in the corresponding area is achieved through the spatial parallel mechanism 1 arbitrarily continuous rotation in a local area to change a direction of the angular momentum vector, thereby outputting gyroscopic moment; through speed change of the high-speed motor 3, magnitude of the angular momentum vector is changed, and reaction moment is output; and the gyroscopic moment and the reaction moment are used alone or together as attitude control moment of the spacecraft such as satellites.

The connecting rod in the spatial parallel mechanism 1 is a spring damper 12, which forms a passive vibration isolator. The vibration isolation frequency is determined according to the optimization of structural dynamics and rotor dynamics, etc., so as to attenuate the high-frequency micro-vibration generated by the rotor. The present application has different modes at different positions and different attitudes, so the vibration isolation frequency is determined according to the optimization of structural dynamics and rotor dynamics, etc., to attenuate the high-frequency micro-vibration generated by the rotor, thereby improving the ultra-quietness performance of the dual-gimbal flywheel to a certain extent.

The forces and moments such as attitude control moment and micro-vibration are finally transmitted to the spacecraft deck through the platform 10, the first hinge 11, the spring damper 12, the second hinge 13, the nut 9, the lead screw 8, the static base 7 and the housing 5, etc., avoiding the transmission of large forces and moments to the low-speed motor 6, which protects the low-speed motor 6 and overcomes the locking problem of low-speed motor 6.

Since the spatial parallel mechanism 1 of the dual-gimbal flywheel drives the rotor assembly to rotate around its radial direction to output a larger gyroscopic moment, and the axial direction of the rotor assembly outputs a smaller moment through the speed change, by mounting the axis of this product to the ground, the three-axis attitude control of the satellite (offset angular momentum) can be achieved, and the rapid maneuvering of the attitude of the roll axis and pitch axis can be achieved; and while the yaw that requires a small maneuvering speed is to achieve attitude control through the speed change of the rotor. It can be seen that the number of the products is reduced; and the use of two products of this type can achieve the satellite zero momentum three-axis attitude control.

The dual-gimbal flywheel has the advantages of minimum required number of attitude control, light weight, combination of attitude control and micro-vibration control, and no motor locking moment limit, so it has the characteristics of ultra-light, ultra-quiet and ultra-agile. It provides a new possibility for the rapid attitude maneuvering and stability control of the spacecraft, especially for the small and medium-sized spacecraft.

The parts of the present application that are not described in detail belong to the technology known to those skilled in the art.

## Claims

1. A low-disturbance dual-gimbal flywheel for spacecraft attitude control, comprising
a spatial parallel mechanism (1), one single wheel body (2), one single high-speed motor (3), a bearing (4),
and a housing (5), wherein the wheel body, the high-speed motor and the bearing together form a rotor assembly; and wherein
the spatial parallel mechanism (1) comprises n drive branch chains, a static base (7) and a movable platform (10) having at least two rotational degrees of freedom;
wherein the bearing (4) is mounted at a center of the wheel body (2), a rotor of the high-speed motor (3) is mounted on the bearing (4); the bearing (4) and a stator of the high-speed motor (3) are together mounted on the movable platform (10), and the wheel body (2), the stator and rotor of the high-speed motor (3), and the bearing (4) are coaxially mounted; the spatial parallel mechanism (1), the wheel body (2), the high-speed motor (3) and bearing (4) are mounted inside the housing (5) by means of a port of the static base (7); a lug outside the housing (5) is connectable to an outer spacecraft deck; the housing (5) encloses a maximum moving range of the wheel body (2); wherein
the spatial parallel mechanism (1) controls movement of the movable platform (10) through movement of the **n** drive branch chains, wherein **n** is a positive integer equal to or larger than 3;
wherein the static base (7) comprises a platform and **n** legs, and the platform is supported by the **n** legs evenly distributed in a circumferential direction of the platform at a bottom of the platform;
wherein the low-disturbance dual-gimbal flywheel is configured to achieve continuous angular maneuvering of the rotor assembly angular momentum vector in a local area through continuous rotation of the movable platform (10) in the local area, wherein a direction of the rotor assembly angular momentum vector is changed and a gyroscopic moment is output,
and to change the magnitude of the angular momentum vector through a speed change of the high-speed motor, wherein a reaction moment is output; wherein the gyroscopic moment and the reaction moment can be used separately or together as an attitude control moment of the spacecraft.

2. The low-disturbance dual-gimbal flywheel according to claim 1, wherein each drive branch chain comprises a low-speed motor (6), a lead screw (8), a nut (9), and a second hinge (13), a spring damper (12), a first hinge (11), and a guide rod (14); the **n** drive branch chains are respectively mounted on the **n** legs of the static base (7); wherein the movable platform (10) is connected to each spring damper (12) through the first hinge (11), and the spring damper (12) is connected to the nut (9) through the second hinge (13); the nut (9) is mounted on the lead screw (8), and the lead screw (8) is mounted on each leg of the static base (7) through a bearing, the rotor of the low-speed motor (6) is fixed to an end of the lead screw (8), and the stator of the low-speed motor (6) is mounted on an end of the leg of the static base (7) , the stator and rotor of the low-speed motor (6) are coaxially mounted; the guide rod (14) is mounted along the leg of the static base (7), the nut (9) is movable along the guide rod (14), and the guide rod (14) is configured to guide the nut (9).

3. The low-disturbance dual-gimbal flywheel according to claim 1, wherein the housing (5) comprises an upper housing and a lower housing, and the upper housing and the lower housing are connected to each other by a screw and sealed by welding.

4. The low-disturbance dual-gimbal flywheel according to claim 1, wherein the wheel body (2) has a circular frame structure, wherein a circular wheel is supported by spokes circularly radiating outward.

5. The low-disturbance dual-gimbal flywheel according to claim 4, wherein an acute angle is present between the spokes of the wheel body (2) and a circular plane of the wheel body (2).

6. The low-disturbance dual-gimbal flywheel according to claim 2, wherein an angle between the lead screw (8) and a plane of an external mounting port of the housing (5) is an angle **α**, and the angle α is chosen according to kinematics and dynamics characteristics of the low-disturbance dual-gimbal flywheel.

7. The low-disturbance dual-gimbal flywheel according to claim 2, wherein the low-disturbance dual-gimbal flywheel is configured to calculate a displacement of each nut (9) by measuring a rotation angle of the lead screw (8), or to directly measure a real-time displacement of each nut (9), and to calculate a real-time attitude of the movable platform (10) by using the displacement of each nut (9), and to determine a real-time deflection angular velocity of the movable platform (10) through a relative change of the attitude of the movable platform (10).

## Patentansprüche

1. Zweifach kardanisches Schwungrad mit niedriger Störung für Raumfahrzeuglagesteuerung, umfassend einen räumlichen
parallelen Mechanismus (1), einen einzelnen Radkörper (2), einen einzelnen
hochgeschwindigkeitsmotor (3), ein Lager (4),
und ein Gehäuse (5), wobei der Radkörper, der Hochgeschwindigkeitsmotor
und das Lager zusammen eine Rotorbaugruppe bilden; und wobei
der räumliche parallele Mechanismus (1) n Antriebszweigketten,
eine statische Basis (7) und eine bewegliche Plattform (10) umfasst, die mindestens zwei drehende Freiheitsgrade aufweist;
wobei das Lager (4) in der Mitte des Radkörpers (2) montiert ist, ein Rotor des Hochgeschwindigkeitsmotors (3) an dem Lager (4) montiert ist; das Lager (4) und ein Stator des Hochgeschwindigkeitsmotors (3) zusammen auf der beweglichen Plattform (10) montiert sind,
und der Radkörper (2), der Stator und der Rotor des hochgeschwindigkeitsmotors (3) und das Lager (4) koaxial montiert sind; der räumliche parallele Mechanismus (1), der Radkörper (2), der Hochgeschwindigkeitsmotor (3) und das Lager (4) durch einen Anschluss der statischen Basis (7) im Gehäuse (5) montiert sind;
eine Lasche außerhalb des Gehäuses (5) mit einem äußeren Raumfahrzeugdeck koppelbar ist; das Gehäuse (5) einen maximalen Bewegungsumfang des Radkörpers (2) umschließt; wobei
der räumliche parallele Mechanismus (1) die Bewegung der beweglichen Plattform (10) durch die Bewegung der **n** Antriebszweigketten steuert, wobei
**n** eine positive ganzzahl gleich oder größer als 3 ist;
wobei die statische Basis (7) eine Plattform und **n** Beine umfasst und die Plattform durch die **n** Beine gestützt wird, die gleichmäßig in Umfangsrichtung der Plattform an einer Unterseite der Plattform verteilt sind;
wobei das zweifach kardanische Schwungrad mit niedriger Störung konfiguriert ist,
ein kontinuierliches Drehmanövrieren des Rotorbaugruppendrehmomentvektors in einem lokalen Bereich durch kontinuierliche Drehung der beweglichen Plattform (10) in dem lokalen Bereich zu erreichen, wobei eine Richtung des Rotorbaugruppendrehmomentvektors geändert wird und ein gyroskopisches Moment ausgegeben wird,
und die Größe des Drehmomentvektors durch eine Geschwindigkeitsänderung des Hochgeschwindigkeitsmotors zu ändern, wobei ein Reaktionsmoment ausgegeben wird; wobei das gyroskopische Moment und das Reaktionsmoment getrennt oder zusammen als ein lagesteuerungsmoment des Raumfahrzeugs verwendet werden können.

2. Zweifach kardanisches Schwungrad mit niedriger Störung nach Anspruch 1, wobei jede Antriebszweigkette einen niedriggeschwindigkeitsmotor (6), eine Antriebsschraube (8), eine Mutter (9) und ein zweites Gelenk (13), einen Federdämpfer (12), ein erstes Gelenk (11) und eine Führungsstange (14) umfasst; die **n** Antriebszweigketten jeweils an den **n** Beinen der statischen Basis (7) montiert sind; wobei die bewegliche Plattform (10) mit jedem federdämpfer (12) durch das erste Gelenk (11) verbunden ist, und
der Federdämpfer (12) durch das zweite Gelenk (13) mit der Mutter (9) verbunden ist; die Mutter (9) auf der Antriebsschraube (8) montiert ist und die Antriebsschraube (8) an jedem Bein der statischen Basis (7) durch ein Lager montiert ist, der Rotor des Niedriggeschwindigkeitsmotors (6) an einem Ende der Antriebsschraube (8) fixiert ist und der Stator des Niedriggeschwindigkeitsmotors (6) an einem Ende des Beins der statischen Basis (7) montiert ist, der Stator und der Rotor des Niedriggeschwindigkeitsmotors (6) koaxial montiert sind; die Führungsstange (14) entlang des Beins der statischen Basis (7) montiert ist, die Mutter (9) entlang der Führungsstange (14) beweglich ist, und die Führungsstange (14) konfiguriert ist, die Mutter (9) zu führen.

3. Zweifach kardanisches Schwungrad mit niedriger Störung nach Anspruch 1, wobei das Gehäuse (5) ein oberes Gehäuse und ein unteres Gehäuse umfasst, und das obere Gehäuse und das untere Gehäuse durch eine Schraube miteinander verbunden und durch Schweißen abgedichtet sind.

4. Zweifach kardanisches Schwungrad mit niedriger Störung nach Anspruch 1, wobei der Radkörper (2) eine kreisförmige Rahmenstruktur aufweist,
wobei ein kreisförmiges Rad durch kreisförmig nach außen strahlende Speichen gestützt wird.

5. Zweifach kardanisches Schwungrad mit niedriger Störung nach Anspruch 4, wobei ein spitzer Winkel zwischen den speichen des Radkörpers (2) und einer kreisförmigen Ebene des Radkörpers (2) vorhanden ist.

6. Zweifach kardanisches Schwungrad mit niedriger Störung nach Anspruch 2, wobei ein Winkel zwischen der Antriebsschraube (8) und einer Ebene einer externen Montageöffnung des Gehäuses (5) ein Winkel **α** ist und der Winkel α entsprechend den kinematischen und dynamischen Eigenschaften des zweifach kardanischen Schwungrads mit niedriger Störung gewählt wird.

7. Zweifach kardanisches Schwungrad mit niedriger Störung nach Anspruch 2, wobei das zweifach kardanische Schwungrad mit niedriger Störung so konfiguriert ist, dass es eine Verschiebung jeder Mutter (9) durch Messen eines Drehwinkels der Antriebsschraube (8) berechnet
oder eine Echtzeitverschiebung jeder Mutter (9) direkt misst, und zum Berechnen einer Echtzeit-Lage der beweglichen Plattform (10) unter Verwendung der Verschiebung jeder Mutter (9)
und zum Bestimmen einer Echtzeit-Auslenkungswinkelgeschwindigkeit der beweglichen Plattform (10) durch eine relative Änderung der Lage der beweglichen Plattform (10).

## Revendications

1. Volant d'inertie à double cardan à faible perturbation pour commande d'attitude d'astronef, comprenant :
un mécanisme parallèle spatial (1), un corps de roue unique (2), un moteur à grande vitesse unique (3), un palier (4), et un boîtier (5), dans lequel le corps de roue, le moteur à grande vitesse et le palier forment ensemble un assemblage de rotor ; et dans lequel le mécanisme parallèle spatial (1) comprend **n** chaînes d'embranchement d'entraînement, une base statique (7) et une plate-forme mobile (10) présentant au moins deux degrés de liberté de rotation ;
dans lequel le palier (4) est monté au niveau d'un centre du corps de roue (2), un rotor du moteur à grande vitesse (3) est monté sur le palier (4) ; le palier (4) et un stator du moteur à grande vitesse (3) sont montés ensemble sur la plate-forme mobile (10), et le corps de roue (2), le stator et le rotor du moteur à grande vitesse (3), et le palier (4) sont montés coaxialement ; le mécanisme parallèle spatial (1), le corps de roue (2), le moteur à grande vitesse (3) et le palier (4) sont montés à l'intérieur du boîtier (5) par le biais d'un orifice de la base statique (7) ; un ergot à l'extérieur du boîtier (5) peut être relié à un pont extérieur d'astronef ; le boîtier (5) délimite une portée de déplacement maximale du corps de roue (2) ;
dans lequel le mécanisme parallèle spatial (1) commande un déplacement de la plate-forme mobile (10) par le biais d'un déplacement des **n** chaînes d'embranchement d'entraînement, dans lequel **n** est un entier positif supérieur ou égal à 3 ;
dans lequel la base statique (7) comprend une plate-forme et **n** jambes, et la plate-forme est supportée par les **n** jambes réparties uniformément dans une direction circonférentielle de la plate-forme au niveau d'une partie inférieure de la plate-forme ;
dans lequel le volant d'inertie à double cardan à faible perturbation est configuré pour accomplir une manœuvre angulaire continue du vecteur moment cinétique de l'assemblage de rotor dans une zone locale par le biais d'une rotation continue de la plate-forme mobile (10) dans la zone locale, dans lequel une direction du vecteur moment cinétique de l'assemblage de rotor est changée et un moment gyroscopique est délivré, et pour changer la grandeur du vecteur moment cinétique par le biais d'un changement de vitesse du moteur à grande vitesse, dans lequel un moment de réaction est délivré ;
dans lequel le moment gyroscopique et le moment de réaction peuvent être utilisés séparément ou ensemble en tant qu'un moment de commande d'attitude de l'astronef.

2. Volant d'inertie à double cardan à faible perturbation selon la revendication 1, dans lequel chaque chaîne d'embranchement d'entraînement comprend un moteur à faible vitesse (6), une vis-mère (8), un écrou (9), et une deuxième articulation (13), un amortisseur à ressort (12), une première articulation (11), et une tige de guidage (14) ; les **n** chaînes d'embranchement d'entraînement sont montées respectivement sur les **n** jambes de la base statique (7) ; dans lequel la plate-forme mobile (10) est reliée à chaque amortisseur à ressort (12) par le biais de la première articulation (11), et l'amortisseur à ressort (12) est relié à l'écrou (9) par le biais de la deuxième articulation (13) ; l'écrou (9) est monté sur la vis-mère (8), et la vis-mère (8) est montée sur chaque jambe de la base statique (7) par le biais d'un palier, le rotor du moteur à faible vitesse (6) est fixé à une extrémité de la vis-mère (8), et le stator du moteur à faible vitesse (6) est monté sur une extrémité de la jambe de la base statique (7), le stator et le rotor du moteur à faible vitesse (6) sont montés coaxialement ; la tige de guidage (14) est montée le long de la jambe de la base statique (7), l'écrou (9) est mobile le long de la tige de guidage (14), et la tige de guidage (14) est configurée pour guider l'écrou (9).

3. Volant d'inertie à double cardan à faible perturbation selon la revendication 1, dans lequel le boîtier (5) comprend un boîtier supérieur et un boîtier inférieur, et le boîtier supérieur et le boîtier inférieur sont reliés l'un à l'autre par une vis et scellés par soudage.

4. Volant d'inertie à double cardan à faible perturbation selon la revendication 1, dans lequel le corps de roue (2) présente une structure de cadre circulaire, dans lequel une roue circulaire est supportée par des rayons s'étendant circulairement vers l'extérieur.

5. Volant d'inertie à double cardan à faible perturbation selon la revendication 4, dans lequel un angle aigu est présent entre les rayons du corps de roue (2) et un plan circulaire du corps de roue (2).

6. Volant d'inertie à double cardan à faible perturbation selon la revendication 2, dans lequel un angle entre la vis-mère (8) et un plan de port de montage externe du boîtier (5) est un angle **α**, et l'angle α est choisi en fonction de caractéristiques cinématiques et dynamiques du volant d'inertie à double cardan à faible perturbation.

7. Volant d'inertie à double cardan à faible perturbation selon la revendication 2, dans lequel le volant d'inertie à double cardan à faible perturbation est configuré pour calculer un déplacement de chaque écrou (9) par la mesure d'un angle de rotation de la vis-mère (8), ou pour mesurer directement un déplacement en temps réel de chaque écrou (9), et pour calculer une attitude en temps réel de la plate-forme mobile (10) à l'aide du déplacement de chaque écrou (9), et pour déterminer une vitesse angulaire de déviation en temps réel de la plate-forme mobile (10) par le biais d'un changement relatif de l'attitude de la plate-forme mobile (10).
